# EUROPÄISCHE PATENTSCHRIFT

(11) **EP 1 303 345 B1**
(45) Veröffentlichungstag und Bekanntmachung des Hinweises auf die Patenterteilung: **28.04.2004**
(21) Anmeldenummer: 01969500.6
(22) Anmeldetag: 24.07.2001
(51) Int. Cl.: B01D 53/14

(54) **VERFAHREN ZUM ENTSÄUERN EINES FLUIDSTROMS UND WASCHFLÜSSIGKEIT ZUR VERWENDUNG IN EINEM DERARTIGEN VERFAHREN**
METHOD FOR REMOVING ACID GASES FROM A FLUID, AND WASHING LIQUID FOR USE IN ONE SUCH METHOD
PROCEDE DE DESACIDIFICATION D'UN COURANT DE FLUIDE ET LIQUIDE DE LAVAGE DESTINE A UN TEL PROCEDE

(30) Priorität: 25.07.2000 DE 10036173
(43) Veröffentlichungstag der Anmeldung: 23.04.2003
(73) Patentinhaber: BASF AKTIENGESELLSCHAFT, 67056 Ludwigshafen (DE)
(72) Erfinder: ASPRION, Norbert, 68163 Mannheim (DE); GROSSMANN, Christoph, Woodland, TX 77386 (US)
(74) Vertreter: Thalhammer, Wolfgang, Dr.
(86) Internationale Anmeldenummer: PCT/EP2001/008554
(87) Internationale Veröffentlichungsnummer: WO 2002/007862

(56) Entgegenhaltungen:
- EP-A- 0 875 280
- WO-A-99/54024
- US-A- 4 336 233
- US-A- 5 277 885

## Beschreibung

Die vorliegende Erfindung betrifft ein Verfahren zum Entsäuern eines Fluidstroms, der Sauergase als Verunreinigungen enthält, sowie eine Wasch- bzw. Absorptionsflüssigkeit zur Verwendung in einem derartigen Verfahren.

In zahlreichen Prozessen in der chemischen Industrie treten Fluidströme auf, die Sauergase, wie z.B. CO₂, H₂S, SO₂, CS₂, HCN, COS oder Mercaptane als Verunreinigungen enthalten. Bei diesen Fluidströmen kann es sich beispielsweise um Gasströme (wie Erdgas, Synthesegas aus Schweröl oder schweren Rückständen, Raffineriegas oder bei der partiellen Oxidation von organischen Materialien, wie beispielsweise Kohle oder Erdöl, entstehende Reaktionsgase) oder um flüssige oder verflüssigte Kohlenwasserstoffströme (wie LPG (Liquified Petroleum Gas) oder NGL (Natural Gas Liquids)) handeln.

Bevor diese Fluide transportiert oder weiterverarbeitet werden können, muß der Sauergasgehalt des Fluids deutlich reduziert werden. CO₂ muß beispielsweise aus Erdgas entfernt werden, da eine hohe Konzentrationen von CO₂ den Brennwert des Gases reduziert. Außerdem kann CO₂ in Verbindung mit in den Fluidströmen häufig mitgeführtem Wasser zu Korrosion an Leitungen und Armaturen führen.

Die Entfernung von Schwefelverbindungen aus diesen Fluidströmen ist aus unterschiedlichen Gründen von besonderer Bedeutung. Beispielsweise muß der Gehalt an Schwefelverbindungen von Erdgas durch geeignete Aufbereitungsmaßnahmen unmittelbar an der Erdgasquelle reduziert werden, denn auch die Schwefelverbindungen bilden in dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Darüber hinaus sind zahlreiche Schwefelverbindungen bereits in niedrigen Konzentrationen übelriechend und, allen voran Schwefelwasserstoff (H₂S), toxisch.

Es wurden daher bereits zahlreiche Verfahren zum Entfernen von Sauergasbestandteilen aus Fluidströmen wie Kohlenwasserstoffgasen, LPG oder NGL entwickelt. Bei den am weitesten verbreiteten Verfahren wird das Sauergase enthaltende Fluidgemisch mit einem organischen Lösungsmittel oder einer wässrigen Lösung eines organischen Lösungsmittels in einer sogenannten Gaswäsche oder einer Flüssig/Flüssig-Extraktion in Kontakt gebracht.

Zu derartigen Gaswaschverfahren und entsprechenden in diesen Verfahren eingesetzten Waschlösungen existiert auch eine umfangreiche Patentliteratur. Grundsätzlich kann man dabei zwei unterschiedlichen Typen von Absorptions- bzw. Lösungsmitteln für die Gaswäsche unterscheiden:

Zum einen werden sog. Physikalische Lösungsmittel eingesetzt, in denen nach erfolgter Absorption die gelösten Sauergase in molekularere Form vorliegen. Typische physikalische Lösungsmittel sind Cyclotetramethylensulfon (Sulfolan) und dessen Derivate, aliphatische Säureamide, NMP (N-Methylpyrrolidon) N-alkylierte Pyrrolidone und entsprechende Piperidone, Methanol und Gemische aus Dialkylethern von Polyethylenglykolen (Selexol®, Union Carbide, Danbury, Conn., USA).

Zum anderen werden chemische Lösungsmittel eingesetzt, deren Wirkungsweise auf chemischen Reaktionen beruht, bei denen nach erfolgter Absorption die gelösten Sauergase in Form chemischer Verbindungen vorliegen. Beispielsweise werden bei den im industriellen Maßstab am häufigsten als chemische Lösungsmittel eingesetzten wässrigen Lösungen aus anorganischen Basen (z.B. Pottaschelösung im Benfield-Prozeß) oder organischen Basen (z.B. Alkanolamine) beim Lösen von Sauergasen Salze gebildet. Das Lösungsmittel kann durch Erhitzen oder Strippen regeneriert werden, wobei die Sauergassalze thermisch zersetzt und/oder mittels Dampf abgestrippt werden. Nach dem Regenerationsprozeß kann das Lösungsmittel wiederverwendet werden. Bevorzugte, beim Entfernen von Sauergasverunreinigungen aus Kohlenwasserstoffgasströmen verwendete Alkanolamine umfassen Monoethanolamin (MEA), Diethanolamin (DEA), Triethanolamin (TEA), Diisopropylamin (DIPA), Aminoethoxyethanol (AEE) und Methyldiethanolamin (MDEA).

Primäre und sekundäre Alkanolamine sind insbesondere für Gaswäschen geeignet, bei denen das gereinigte Gas einen sehr niedrigen CO₂-Gehalt aufweisen muß (z.B. 10 ppmᵥ CO₂). Der Stickstoff der primären und sekundären Alkanolaminen reagiert direkt mit Kohlendioxid unter Bildung von löslichem Carbamat. In der wässrigen Aminlösung steht das Carbamat mit Bicarbonat in einem charakteristischen Gleichgewicht. Zum Regenerieren der Aminlösung wird im industriellen Einsatz häufig ein zweistufiger Regenerationsprozeß eingesetzt, wobei man das beladene Lösungsmittel zunächst in einer oder mehreren Flash-Kolonnen entspannt, so daß ein Teil des absorbierten CO₂ aus der Lösung verdampft. Restliches Kohlendioxid und gegebenenfalls weitere absorbierte Sauergase werden anschließend durch Strippen mit Dampf entfernt. Lösungsmittel, die primäre und sekundäre Alkanolamine enthalten, erfordern jedoch zum Zersetzen des Carbamats eine größere Mengen an Dampf als tertiäre Amine und entsprechend viel Wärmeenergie; deshalb werden häufig tertiäre Amine eingesetzt.

Aus der europäischen Patentanmeldung EP-A 0 322 924 ist bekannt, eine wässrige Aminlösung, die tertiäre Alkanolamine, insbesondere MDEA, enthält, zum Entsäuern von Gasströmen zu verwenden. Im Gegensatz zu primären und sekundären Alkanolaminen reagieren tertiäre Alkanolamine nicht direkt mit Kohlendioxid, da das Amin voll substituiert ist. Vielmehr wird Kohlendioxid mit dem tertiären Alkanolamin und mit Wasser zu Bicarbonat in einer Reaktion mit geringer Reaktionsrate umgesetzt. Da keine direkte Bindung zwischen tertiären Alkanolaminen und Kohlendioxid entsteht, kann die Aminlösung sehr wirtschaftlich regeneriert werden. In vielen Fällen reicht dabei eine Flash-Regenerierung mit einer oder mehreren Entspannungsstufen aus. Eine optionale zusätzliche thermische Regenerierung erfordert wesentlich weniger Energie als im Falle von Lösungen aus primären oder sekundären Alkanolaminen. Tertiäre Amine eignen sich inbesondere für eine selektive Entfernung von H₂S aus Gasgemischen, die H₂S und CO₂ enthalten.

Nachteilig an der Verwendung von tertiären Alkanolaminlösungen ist allerdings, daß wegen der geringen Reaktionsrate des Kohlendioxids der Waschprozeß mit einer sehr hohen Verweilzeit durchgeführt werden muß. Die benötigten Absorptions- und Regenerationssäulen sind daher, verglichen mit Systemen, bei denen entweder primäre oder sekundäre Alkanolamine eingesetzt werden, sehr hoch. Daher wurde versucht, die Absorptionsrate von Kohlendioxid in wässrigen Lösungen von tertiären Alkanolaminen durch Zugabe weiterer Verbindungen, die als Aktivatoren oder Promotoren bezeichnet werden, zu erhöhen.

In der deutschen Patentanmeldung DE-A-1 542 415 wurde vorgeschlagen, die Wirksamkeit sowohl von physikalischen Lösungsmitteln wie auch von chemischen Lösungsmitteln durch Zugabe von Monoalkylalkanolaminen oder von Morpholin und dessen Derivaten zu erhöhen. In EP-A-0 160 203 wird Monoethanolamin als Aktivator erwähnt. In der deutschen Patentanmeldung DE-A-1 904 428 wird die Zugabe von Monomethylethanolamin (MMEA) als Beschleuniger zur Verbesserung der Absorptionseigenschaften einer MDEA-Lösung beschrieben.

In dem US-Patent US 4,336,233 wird eine der derzeit wirksamsten Waschflüssigkeiten zum Entfernen von CO₂ und H₂S aus einem Gasstrom beschrieben. Es handelt sich dabei um eine wässrige Lösung von Methyldiethanolamin (MDEA) und Piperazin als Absorptionsbeschleuniger oder Aktivator (aMDEA®, BASF AG, Ludwigshafen). Die dort beschriebene Waschflüssigkeit enthält 1,5 bis 4,5 mol/l Methyldiethanolamin (MDEA) und 0,05 bis 0,8 mol/l, bevorzugt bis zu 0,4 mol/l Piperazin. Das Entfernen von CO₂ und H₂S unter Verwendung von MDEA wird ferner in den folgenden Patenten der Anmelderin detaillierter beschrieben: US 4,551,158; US 44,553,984; US 4,537,753; US 4,999,031; CA 1 291 321 und CA 1 295 810.

Aus der internationalen Patentanmeldung WO 89/11327 ist eine Absorptions- bzw. Waschflüssigkeit bekannt, die aus einer wäßrigen Aminlösung besteht, die tertiäre Amine, sowie geringe Mengen Polyamine, beispielsweise aliphatische Diamine, als Aktivator enthält.

Aus dem US-A- 5277885 ist eine Weschflümigkeit zum Entsäuern eines Fluidstroms bekannt , die einen Aktivator der Formel RRN- X-NRR enthält, wobei X einem Alkylen rest mit 2 bis 9 C-Atomen und jeder R einem Kohlenwasserstoffrest mit 1 bis 6 C-Atomen oder ein Wasserstoffatom zäpresentiert. Besonders bevorzugt sind Aminoethylethamolamin, Hexamethylenediamin und Dimethylaminopropylamin.

Aufgabe der vorliegenden Erfindung ist es, ein verbessertes Verfahren zum Entsäuern eines Fluidstroms, der Sauergase als Verunreinigungen enthält, durch Gaswäsche anzugeben, wobei Sauergase wie CO₂, H₂S, COS, CS₂ oder Mercaptane wirksam aus dem Fluidstrom entfernt werden können und die Absorptionskinetik von CO₂ und die Beladbarkeit der Waschflüssigkeit mit CO₂ gegenüber den bekannten Verfahren verbessert wird.

Gelöst wird diese Aufgabe durch das Verfahren gemäß vorliegendem Anspruch 1.

Gegenstand der vorliegenden Erfindung ist daher ein Verfahren zum Entsäuern eines Fluidstroms, der Sauergase, wie CO₂, H₂S, COS, CS₂ oder Mercaptane als Verunreinigungen enthält, wobei man in wenigstens einem Absorptionsschritt den Fluidstrom mit einer Waschflüssigkeit in innigen Kontakt bringt, die eine wässrige Aminlösung enthält, die wenigstens ein tertiäres aliphatisches Alkanolamin mit 2 bis 12 C-Atomen und einen Aktivator der Formel R₁HN-X-NHR₂ enthält, wobei X einen Alkylenrest mit 2 bis 9 C-Atomen, R₁ einen Kohlenwasserstoffrest mit 1 bis 6 C-Atomen und R₂ einen Kohlenwasserstoffrest mit 1 bis 6 C-Atomen oder ein Wasserstoffatom repräsentiert. Dabei werden die Sauergase aus dem Fluidstrom entfernt und von der Waschflüssigkeit absorbiert. Der von Sauergasen weitgehend gereinigte Fluidstrom und die mit Sauergasen beladene Waschflüssigkeit werden anschließend voneinander getrennt. Überraschend wurde gefunden, daß die Verwendung eines Alkylendiamins der oben bezeichneten Form als Aktivator die Beladbarkeit der Waschflüssigkeit gegenüber bekannten Waschflüssigkeiten deutlich erhöht. Die erfindungsgemäß vorgeschlagenen Alkylendiamine zeigen eine wesentlich bessere Absorptionskinetik für CO₂ als die herkömmlich als Aktivatoren verwendeten primären oder sekundären Alkanolamine. Erfindungsgemäß ist R₁ ein Methylrest und R₂ Wasserstoff (3-Methylaminopropylamin) oder ebenfalls ein Methylrest (N,N'-Dimethylaminopropylamin). Besonders bevorzugt wird 3-Methylaminopropylamin (MAPA) als Aktivator verwendet. Die Absorptionskinetik ist vergleichbar mit der des Aktivators Piperazin, wobei 3-Methylaminopropylamin verglichen mit Piperazin aber eine wesentlich bessere Löslichkeit in tertiären Alkanolaminen zeigt. Es können daher Waschflüssigkeiten mit deutlich höherer Aktivatorkonzentration eingesetzt werden.

Gegenstand der vorliegenden Erfindung ist daher in allgemeinster Form die Verwendung eines Alkylendiamins der Form

R₁HN-X-NHR₂,

wobei X ein Alkylenrest mit 2 oder 3 C-Atomen, R₁ ein methylrest und R₂ ein methylrest oder ein Wasserstoffatom (H) ist, zum Entfernen von Sauergasen aus einem sauergashaltigen Fluidstrom, insbesondere die Verwendung von MAPA als Aktivator in einer wässrigen, tertiäre Alkanolamine enthaltenden Waschflüssigkeit.

Gegenstand der vorliegenden Erfindung ist auch eine Absorptions- bzw. Waschflüssigkeit, die insbesondere für die Verwendung in dem erfindungsgmäßen Verfahren geeignet ist, welche eine wässrige Aminlösung enthält, die wiederum wenigstens ein tertiäres aliphatisches Alkanolamin mit 2 bis 12 C-Atomen und ein Alkylendiamins der Form R₁HN-X-NHR₂ als Aktivator enthält, wobei X ein Alkylenrest mit 2 oder 3 C-Atomen, R₁ ein methylrest und R₂ ein methylrest oder ein Wasserstoffatom ist.

Die Konzentration des tertiären aliphatischen Alkanolamins liegt vorteilhaft im Bereich von 10 bis 60 Gew.%. Vorzugsweise beträgt die Alkanolaminkonzentration 20 bis 50 Gew.% und besonders bevorzugt 20 bis 40 Gew.%. Die Konzentration des Aktivators beträgt vorteilhaft 0,1 bis 50 Gew.%, vorzugsweise 5 bis 40 Gew.% und besonders bevorzugt 8 bis 30 Gew.%. Diese Angaben beziehen sich auf die einsatzbereite Waschflüssigkeit. Hergestellt wird die erfindungsgemäße Waschflüssigkeit üblicherweise als Konzentrat, das vom Nutzer durch Zugabe von Wasser auf die Endkonzentration verdünnt wird.

Bei dem tertiären Alkanolamin kann es sich um übliche in der Gas- bzw. LPG-Wäsche bewährte Alkanolamine handeln, wie sie beispielsweise in WO 89/11327 beschrieben sind. Besonders bevorzugt wird allerdings Triethanolamin (TEA) und Methyldiethanolamin (MDEA) verwendet. Die Verwendung von MDEA ist insbesondere für Aminwäschen von Kohlenwasserstoffgasen, wie Erdgas, bevorzugt, während die Verwendung von TEA bei der LPG-Wäsche vorteilhaft sein kann. So wird beispielsweise in US 5,877,386 beschrieben, daß TEA-haltige Aminlösungen eine geringere Löslichkeit in LPG besitzen, was die Aminverluste im Waschprozess verringert.

Vorteilhaft kann die Waschflüssigkeit außerdem Piperazin oder Methylpiperazin als zusätzliche Aktivatoren in Konzentrationen von 1-20 Gew,%, bevorzugt 1-10 Gew.%, besonders bevorzut 1-8 Gew.% enthalten. Die erfindungsgemäße Waschflüssigkeit kann eine wässrige Aminlösung sein, die, wie beispielsweise im US-Patent 4,336,233 beschrieben ein tertiäres aliphatisches Alkanolamin, insbesondere MDEA, und Piperazin als ersten Aktivator enthält (also beispielsweise das als aMDEA® von der BASF AG, Ludwigshafen, Deutschland, hergestellte und vertriebene Absorptionsmittel). Erfindungsgemäß wird vorgeschlagen ein Alkylendiamin wie MAPA als zweiten Aktivator zuzugegeben. Überraschend stellt man bei Waschflüssigkeiten mit gleichem Gesamtamingehalt fest, daß das Ersetzen von Wasser durch MAPA im Vergleich zu dem Ersetzen von Wasser durch MDEA zu einer beschleunigten Absorptionskinetik und zu einer bis zu 80% höheren Beladbarkeit an CO₂ führt.

Gegebenenfalls kann die erfindungsgemäße Waschflüssigkeit außerdem geringe Mengen eines physikalischen Absorptions- bzw. Lösungsmittel für saure Gase, wie z.B. Sulfolan, aliphatische Säureamide, N-Methylpyyrolidon oder Methanol enthalten.

Die erfindungsgemäße Waschlösung erlaubt außerdem eine weitgehende Entfernung von H₂S aus dem Gasstrom. Auch COS und Mercaptane können zumindest teilweise entfernt werden.

Das erfindungsgemäße Verfahren kann mit den üblichen, in der Gaswäsche oder der LPG-Wäsche eingesetzten Waschvorrichtungen durchgeführt werden. Geeignete Waschvorrichtungen, die in einer Absorptionszone einen innigen Kontakt zwischen dem Fluidstrom und der Waschflüssigkeit gewährleisten, sind beispielsweise Füllkörper-, Packungs- und Bodenkolonnen, Radialstromwäscher, Strahlwäscher, Venturiwäscher und Rotations-Sprühwäscher, bevorzugt Pakkungs-, Füllkörper- und Bodenkolonnen.

In der Absorptionskolonne besitzt die Waschflüssigkeit typischerweise eine Temperatur von 40 bis 70 °C am Kolonnenkopf und von 50 bis 100 °C am Kolonnensumpf. Der Gesamtdruck in der Kolonne liegt im allgemeinen zwischen 1 und 120 bar, bevorzugt zwischen 10 und 100 bar.

Das erfindungsgemäße Verfahren kann in einem Schritt oder in mehreren aufeinanderfolgenden Teilschritten durchgeführt werden. Im letzteren Fall wird der die sauren Gasbestandteile enthaltende Fluidstrom in jedem Teilschritt mit jeweils einem Teilstrom der Waschflüssigkeit in innigen Kontakt gebracht. Beispielsweise kann an unterschiedlichen Stellen der Absorptionszone ein Teilstrom des Absorptionsmittels zugeführt werden, wobei - etwa bei Verwendung einer Absorptionskolonne - die Temperatur der zugeführten Waschflüssigkeit in aufeinanderfolgenden Teilschritten in der Regel vom Sumpf zum Kopf der Kolonne abnimmt.

Die mit sauren Gasbestandteilen beladene Waschflüssigkeit und das gereinigte Gas werden voneinander getrennt und aus der Absortionzone abgeführt. Die Waschflüssigkeit kann dann regeneriert und anschließend mit verringerter Beladung in die Absorptionszone zurückgeführt werden. Typischerweise wird bei der Regeneration eine Druckentspannung der beladenen Waschflüssigkeit von einem in der Absorptionszone herrschenden höheren Druck auf einen niedrigeren Druck durchgeführt. Die Druckentspannung kann beispielsweise mittels eines Drosselventils geschehen. Ergänzend oder alternativ kann die Waschflüssigkeit über eine Entspannungsturbine geleitet werden, mit der ein Generator angetrieben und elektrische Energie gewonnen werden kann. Die so der Waschflüssigkeit bei der Entspannung entzogene Energie läßt sich beispielsweise auch zum Antrieb von Flüssigkeitspumpen im Kreislauf der Waschflüssigkeit verwenden.

Die Freisetzung der sauren Gasbestandteile kann beim Regenerieren der Waschflüssigkeit beispielsweise in einer Entspannungskolonne, beispielsweise einem senkrecht oder waagrecht eingebauten Flashbehälter oder einer Gegenstromkolonne mit Einbauten erfolgen. Es können mehrere Entspannungskolonnen hintereinander geschaltet werden, in denen bei unterschiedlichen Drücken regeneriert wird. Beispielsweise kann die Waschflüssigkeit zunächst in einer Vorentspannungskolonne bei hohem Druck, der beispielsweise ca. 1,5 bar über dem Partialdruck der sauren Gasbestandteile in der Absorptionszone liegt, und anschließend in einer Hauptentspannungskolonne bei niedrigem Druck, beispielsweise bei 1 bis 2 bar absolut, regeneriert werden. Bei einem mehrstufigen Entspannungsprozeß werden in der ersten Entspannungskolonne vorzugsweise Inertgase, wie absorbierte Komponenten des zu reinigenden Gases, und in den nachfolgenden Entspannungskolonnen die sauren Gasbestandteile freigesetzt.

Mit Hilfe einer vorzugsweise ebenfalls vorgesehenen Strippung mit einem inerten Fluid können bei der Regeneration weitere Sauergase aus der Waschflüssigkeit entfernt werden. Dazu werden die Waschflüssigkeit und ein Strippungsmittel, vorteilhaft ein heißes inertes Gas, wobei Stickstoff oder Wasserdampf bevorzugt sind, im Gegenstrom durch eine mit Füllkörpern, Packungen oder Böden versehene Desorptionskolonne geleitet. Bevorzugt beträgt der Druck bei der Strippung 1 bis 3 bar absolut und die Temperatur 90 bis 130 °C.

Eine Regeneration der Waschflüssigkeit in mehreren aufeinanderfolgenden Teilschritten, wobei die Beladung der Waschflüssigkeit mit Sauergasbestandteilen mit jedem Teilschritt abnimmt, wird beispielsweise in US 4,336,233 beschrieben. Danach wird eine Grobwäsche mit reinem Entspannungskreislauf ohne Strippung durchgeführt, wobei die beladene Waschflüssigkeit über eine Entspannungsturbine entspannt und schrittweise in einer vorentspannungskolonne und einer Hauptentspannungskolonne regeneriert wird. Diese Variante kommt vor allem dann zum Einsatz, wenn die auszuwaschenden sauren Gase hohe Partialdrücke aufweisen und wenn an die Reinheit des Reingases nur geringe Anforderungen gestellt werden.

In einer weiteren bevorzugten Ausführungsform des erfindungsgemäßen Verfahrens sind die in aufeinanderfolgenden Teilschritten des Wasch- bzw. Absorptionsvorgangs eingesetzten Teilströme der Waschflüssigkeit durch aufeinanderfolgende Teilschritte des Regenerationsvorgangs erhältlich und weisen eine abnehmende Beladung mit sauren Gasbestandteilen auf. Dabei ist insbesondere ein Verfahren bevorzugt bei dem das die sauren Bestandteile enthaltende Feedgas oder -LPG nacheinander mit einem ersten Teilstrom der Waschflüssigkeit, der nach teilweiser Regenerierung in einer Entspannungskolonne und vor der Strippung, und einem zweiten Teilstrom der Waschflüssigkeit, der nach der Strippung erhalten wird, in innigen Kontakt gebracht wird.

Beispielsweise kann, wie in US 4,336,233 beschrieben, der Absorptionsschritt in zwei Teilschritten, einer Grob- und einer Feinwäsche, und der Regenerierungsschritt schrittweise durch Druckentspannung in einer Entspannungsturbine, einer Vorentspannungskolonne und einer Hauptentspannungskolonne, sowie durch anschließende Strippung durchgeführt werden. In diesem Fall kann der Teilstrom der Waschflüssigkeit für die Grobwäsche von der Hauptentspannungskolonne und der Teilstrom für die Feinwäsche von der Strippung stammen.

Das regenerierte Absorptionsmittel wird üblicherweise vor Einspeisung in die Absorptionszone über einen Wärmetauscher geleitet und auf die für den Waschvorgang erforderliche Temperatur gebracht. Beispielsweise kann der die Strippkolonne verlassenden regenerierten Waschflüssigkeit Wärme entzogen und der noch Sauergasbestandteile enthaltenden Waschflüssigkeit vor deren Eintritt in die Strippkolonne zugeführt werden.

Das erfindungsgemäße Verfahren kann mit typischen zur Gaswäsche und anschließender Regeneration der Waschflüssigkeit verwendeten Anlagenkonfigurationen durchgeführt werden, wie sie beispielsweise in US 4,336,233 für einen einstufigen bzw. zweistufigen Waschprozeß und besonders ausführlich in EP-A 0 322 924 für einen einstufigen Waschprozeß mit Entspannungs- und Strippungsschritt beschrieben sind.

Das erfindungsgemäße Verfahren wird im folgenden unter Bezugnahme auf die beigefügte Zeichnung näher erläutert.

In der Zeichnung zeigt
- Figur 1: eine schematische Darstellung einer Anlage zur Durchführung des erfindungsgemäßen Verfahrens in einem einstufigen Waschprozeß, dem sich eine Regeneration der Waschflüssigkeit mit Entspannungs- und Strippkolonnen anschließt;
- Figur 2: ein Diagramm zur relativen CO₂-Gleichgewichtsbeladung einer erfindungsgemäßen Waschflüssigkeit bezogen auf eine Vergleichswaschflüssigkeit in Abhängigkeit von der Konzentration des Aktivators;
- Figur 3: ein Diagramm zur relativen CO₂-Gleichgewichtsbeladung einer erfindungsgemäßen Waschflüssigkeit bezogen auf eine Vergleichswaschflüssigkeit in Abhängigkeit vom Gesamtamingehalt;
- Figur 4: ein Diagramm zur relativen H₂S-Gleichgewichtsbeladung einer erfindungsgemäßen Waschflüssigkeit bezogen auf eine Vergleichswaschflüssigkeit in Abhängigkeit von der Konzentration des Aktivators;
- Figur 5: ein Diagramm zur relativen Stoffübergangsgeschwindigkeiten von CO₂ einer erfindungsgemäßen Waschflüssigkeit bezogen auf eine Vergleichswaschflüssigkeit in Abhängigkeit von der Konzentration des Aktivators;
- Figur 6: ein Diagramm entsprechend dem Diagramm der Figur 5 unter Verwendung einer anderen Vergleichswaschflüssigkeit;
- Figur 7: ein Diagramm, das die Erstarrungspunkte einer erfindungsgemäßen Waschflüssigkeit und einer Vergleichswaschflüssigkeit in Abhägigkeit von der Konzentration des Aktivators zeigt; und
- Figur 8: ein Diagramm, das die Erstarrungspunkte einer piperazinhaltigen Waschflüssigkeit bei Zugabe eines erfindungsgemäßen Aktivators bzw. bei Zugabe von weiterem Piperazin zeigt.

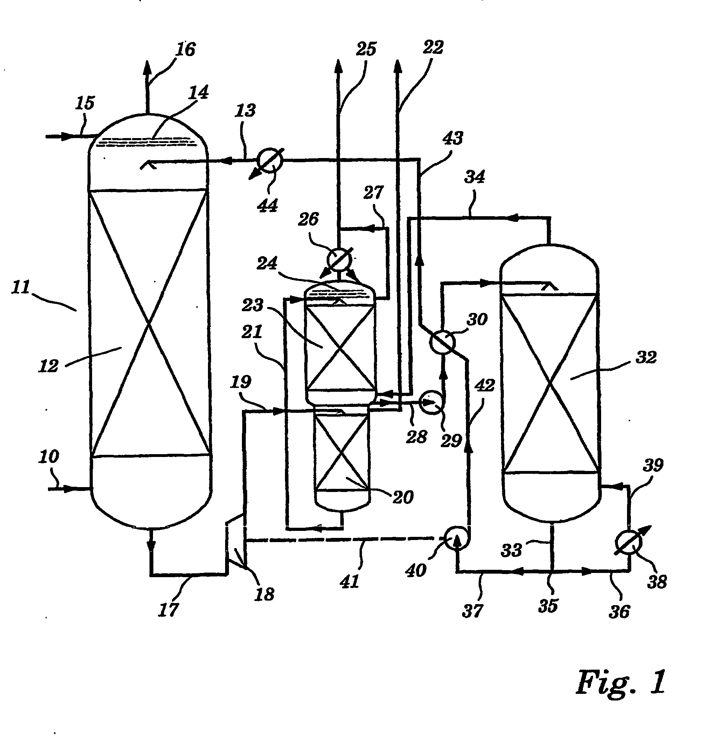

Bezugnehmend auf Figur 1 erkennt man eine bevorzugte Anordnung zur Durchführung des erfindungsgemäßen Verfahrens, wie sie beispielsweise zum Entfernen von Sauergasen aus einem CO₂ und weitere Sauergase enthaltenden Erdgasstrom verwendet wird.

Das Fluidgemisch, welches beispielsweise Erdgas als Wertprodukt enthalten kann, und darüber hinaus Sauergase wie H₂S, CO₂ und COS umfaßt, wird über eine Zuleitung 10 in eine Absorptionskolonne 11 geleitet. Vor dem Eintritt in die Absorptionskolonne können (nicht dargestellte) Trenneinrichtungen vorgesehen sein, welche beispielsweise Flüssigkeitströpfchen aus dem Rohgas entfernen. Die Absorptionskolonne 11 besitzt eine Absorptionszone 12, in welcher ein inniger Kontakt des sauren Rohgases mit einer an Sauergasen armen Waschflüssigkeit gewährleistet wird, die über eine Zuleitung 13 in den Kopfbereich der Absorptionskolonne 11 gelangt und im Gegenstrom zu dem zu behandelnden Gas geführt wird. Der Absorptionsbereich 12 kann beispielsweise durch Böden, etwa Sieboder Glockenböden, oder durch Packungen realisiert werden. Typischerweise werden 20 bis 34 Böden verwendet. Im Kopfbereich der Absorptionskolonne 11 können Rückwaschböden 14 angeordnet sein, um den Verlust an leicht flüchtigen Bestandteilen der Waschflüssigkeit zu verringern. Die beispielsweise als Glockenböden ausgebildeten Rückwaschböden 14 werden über eine Kondensatleitung 15 mit Wasser gespeist, durch welches das behandelte Gas geleitet wird.

Der von Sauergasbestandteilen weitgehend befreite Erdgasstrom verläßt die Absorptionskolonne 11 über einen Kopfabzug 16. In der Leitung 16 kann - insbesondere wenn in der Kolonne 11 keine Rückwaschböden vorgesehen sind, ein (nicht dargestellter) Abscheider angeordnet sein, welcher mitgerissene Waschflüssigkeit aus dem Gasstrom entfernt.

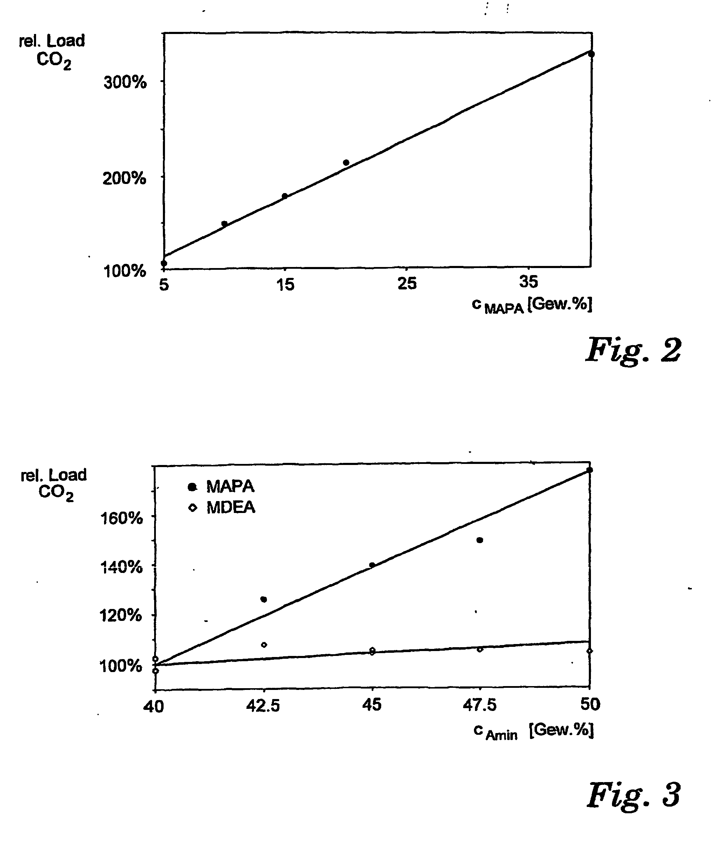

Anstelle der hier beschriebenen einstufigen Absorptionseinrichtung kann auch eine zweistufige Variante verwendet werden, wie sie beispielsweise in Figur 2 des US-Patentes 4,336,233 dargestellt ist.

Die sauergashaltige Waschflüssigkeit verläßt die Absorptionskolonne 11 über eine Leitung 17 und gelangt über eine optional vorhandene Entspannungsturbine 18 und eine Leitung 19 in den Kopfbereich einer ersten Entspannungskolonne 20. In der Entspannungskolonne 20 wird der Druck der Waschflüssigkeit plötzlich erniedrigt, so daß die leichteren Komponenten des zu reinigenden Gases aus der Waschflüssigkeit abdampfen können. Diese Komponenten können verbrannt oder in Absorptionskolonne 11 zurückgeführt werden. Die Waschflüssigkeit verläßt die erste Entspannungskolonne 20 über eine Leitung 21 am Boden der Kolonne, während die abgedampften Komponenten des zu reinigenden Gases über eine Leitung 22 am Kopf der Entspannungskolonne 20 abgezogen werden.

Im dargestellten Beispiel gelangt die Waschflüssikeit anschließend in eine zweite Entspannungskolonne 23, die beispielsweise als Niederdruckkolonne (d.h. als sogenannter Low-Pressure-Flash) ausgebildet sein kann. Schwerer flüchtige Sauergase dampfen, nach Durchtritt durch gegebenenfalls vorgesehene Rückwaschböden 24, über die Leitung 25 ab. Am Kopf der zweiten Entspannungskolonne 23 kann ein Wärmetauscher mit Kopfverteiler oder Kondensator 26 vorgesehen sein, der mitgerissene Tröpfchen der Waschflüssigkeit in die Entspannungskolonne zurückführt. Der Kondensator 26 kann gegebenenfalls durch eine Bypassleitung 27 überbrückt werden. Die Waschflüssigkeit verläßt die zweite Entspannungskolonne 23 über eine Leitung 28 und wird über eine Pumpe 29 durch einen Wärmetauscher 30 gepumpt, wo sie Wärme von der zur Absorptionskolonne 11 zurückgeführten, regenerierten Waschflüssigkeit aufnimmt. Anschließend gelangt die Waschflüssigkeit in den Kopfbereich einer Strippkolonne 32, in welchem die Waschflüssigkeit im Gegenstrom zu einem Gasstrom, beispielsweise Wasserdampf, geführt wird. In der Strippkolonne 32 werden restliche Sauergasbestandteile aus der Waschflüssigkeit entfernt. Die Waschflüssigkeit verläßt den Sumpfbereich der Strippkolonne 32 über eine Leitung 33, während die abgestrippten Sauergasbestandteile über eine Leitung 34 in den Sumpfbereich der zweiten Entspannungskolonne 23 zurückgeführt werden. Die durch die Leitung 33 abströmende Waschflüssigkeit gelangt zu einem Verteiler 35, an welchem ein Teil der Waschflüssigkeit über eine Leitung 36 zu einem Aufkocher 38 transportiert wird, der die Flüssigkeit erhitzt und als Dampf über eine Leitung 39 in das Stripprohr zurückführt. Ein anderer Teil der Waschflüssigkeit gelangt vom Verteiler 35 über die Leitung 37 zu einer Pumpe 40, die, wie schematisch durch den Übertragungsweg 41 angedeutet ist, mit der Entspannungsturbine 18 verbunden ist. Die Entspannungsturbine liefert einen Teil der zum Antrieb der Pumpe 40 nötigen Energie. Über eine Leitung 42 gelangt die regenerierte, an Sauergasen arme Waschflüssigkeit in den Wärmetauscher 30, wo sie Wärme auf die durch die Leitung 28 in die Strippkolonne 32 geleitete Waschflüssigkeit überträgt. Die regenerierte Waschflüssigkeit wird dann über die Leitungen 43 und 13 in die Absorptionskolonne 11 zurückgeführt, wo sie erneut Sauergase aufnehmen kann. Vor Eintritt in die Absorptionskolonne kann ein weiterer Wärmetauscher 44 vorgesehen sein, welcher die Waschflüssigkeit auf die erforderliche Zulauftemperatur abkühlt. Ebenso können Filter und andere (nicht dargestellte) Reinigungseinrichtungen vorgesehen sein, um die Waschflüssigkeit vor ihrem Eintritt in die Absorptionskolonne 11 zu reinigen.

Im Bereich der Leitungen 43,13 können auch (nicht dargestellte) Zuleitungen für frische Waschflüssigkeit vorgesehen sein, falls die erforderliche zulaufmenge nicht allein durch regenerierte Waschflüssigkeit aufrechterhalten werden kann.

Die Menge an zulaufender Waschflüssigkeit kann durch die Leistung der Pumpen und durch (nicht dargestellte) Ventil- und Drosseleinrichtungen reguliert werden.

Im folgenden werden Vorteile der Erfindung anhand von Vergleichsbeispielen näher erläutert.

### Beispiele:

### 1. CO₂-Gleichgewichtsbeladung

Zur Messung der Gleichgewichtsbeladung wurden 100 ml Waschflüssigkeit in einer thermostatisierten Frittenflasche (250 ml) bei 70 °C und 1 bar mit einem Gasvolumenstrom von 10 Normalliter pro Stunde CO₂ über einen Zeitraum von 4 Stunden begast. Das gestrippte Wasser wurde in einem Wendelkühler zurückkondensiert. Anschließend wurde die CO₂-Konzentration in der Lösung analytisch bestimmt und daraus die Gleichgewichtsbeladung in Normalliter Gas pro Kilogramm Waschflüssigkeit (Nl/kg) berechnet.
(1a) In Figur 2 ist die relative CO₂-Gleichgewichtsbeladung (in der Figur als "rel. Load CO₂" bezeichnet) einer erfindungsgemäßen Waschflüssigkeit mit 40 Gew.% Gesamtamingehalt, die 3-Methylaminopropylamin (MAPA) gelöst in einer Mischung aus MDEA und 60 Gew.% Wasser enthält, bezogen auf die CO₂-Gleichgewichtsbeladung einer Vergleichswaschflüssigkeit, die 5 Gew.% Piperazin, 35 Gew.% MDEA und 60 Gew.% Wasser enthält, in Abhängigkeit vom MAPA-Gehalt (in Gew.%) dargestellt. Die erfindungsgemäße Waschflüssigkeit weist im gesamten Bereich eine höhere Beladbarkeit mit CO₂ auf, die bei der höchsten angegebenen MAPA-Konzentration den dreifachen Wert der Vergleichswaschflüssigkeit übersteigt.
(1b) In einem weiteren Experiment (Figur 3) wurde die CO₂-Gleichgewichtsbeladung einer Waschflüssigkeit in Abhängigkeit vom Gesamtamingehalt (in Gew.%) untersucht. Die Basiswaschflüssigkeit hatte folgende Zusammensetzung: 60 Gew.% Wasser, 33,5 Gew.% MDEA und 6,5 Gew.% Piperazin (d.h. 40 Gew.% Gesamtamingehalt). In zwei Testreihen wurden Waschflüssigkeiten untersucht, deren Gesamtamingehalt - ausgehend von der Zusammensetzung der Basiswaschflüssigkeit - durch Ersetzen von Wasser durch MAPA (erfindungsgemäße Waschflüssigkeit) bzw. durch Ersetzen von Wasser durch MDEA (Vergleichswaschflüssigkeit) erhöht wurde. In Figur 3 ist die relative CO₂-Gleichgewichtsbeladung dieser Waschflüssigkeiten bezogen auf die CO₂-Gleichgewichtsbeladung der Basiswaschflüssigkeit dargestellt. Kreise bezeichnen in Figur 3 die Daten von MAPA und Rauten die Messungen für MDEA. Man erkennt, daß die erfindungsgemäße Waschflüssigkeit (Kreise) im gesamten Bereich eine höhere Beladbarkeit mit CO₂ aufweist als die Basiswaschflüssigkeit. Durch Erhöhung des MAPA-Gehalts auf 10 Gew.% (gelöst in einer Mischung aus 6,5 Gew.% Piperazin, 33,5 Gew.% MDEA und Wasser; dies entspricht einem Gesamtamingehalt von 50 Gew.%) kann die Beladbarkeit mit CO₂ bei den gewählten Bedingungen etwa verdoppelt werden. Eine Erhöhung des MDEA-Gehalts der Vergleichs flüssigkeit (Rauten in Fig. 3) um 10 Gew.% auf einen Gesamtamingehalt von 50 Gew.% bringt hingegen keine merkliche Verbesserung in der CO₂-Beladbarkeit.

### 2. H₂S-Gleichgewichtsbeladung

Die H₂S-Gleichgewichtsbeladung wurde analog derjenigen von CO₂ gemäß Beispiel 1 bestimmt.

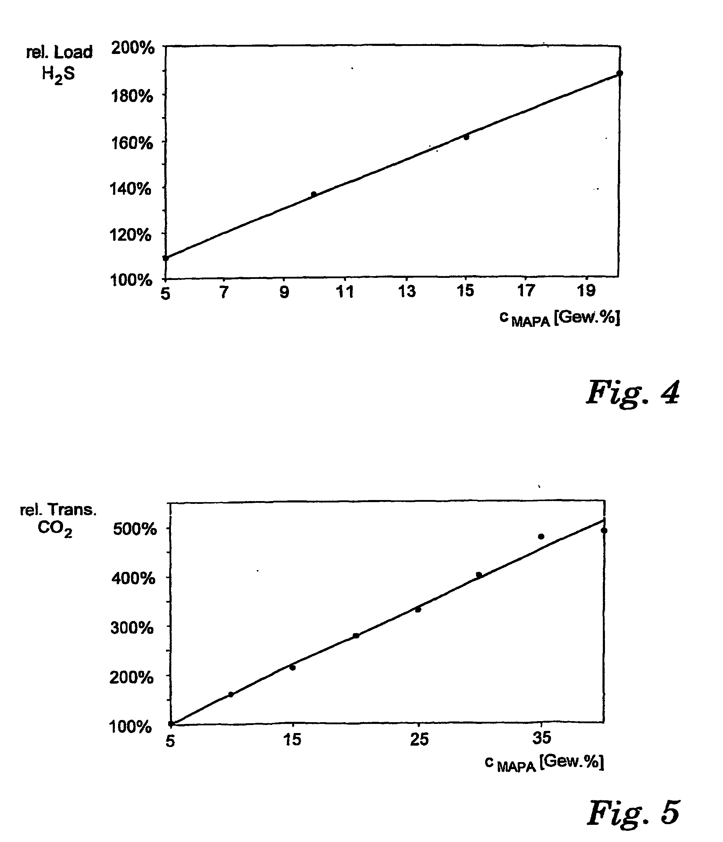

In Figur 4 ist die relative H₂S-Gleichgewichtsbeladung ("rel. Load H₂S") einer erfindungsgemäßen Waschflüssigkeit mit 40 Gew.% Gesamtamingehalt, die MAPA gelöst in einer Mischung aus MDEA und 60 Gew.% Wasser enthält, bezogen auf die CO₂-Gleichgewichtsbeladung einer Vergleichswaschflüssigkeit, die 5 Gew.% Piperazin, 35 Gew.% MDEA und 60 Gew.% Wasser enthält, in Abhängigkeit vom MAPA-Gehalt dargestellt. Die erfindungsgemäße Waschflüssigkeit weist im gesamten Bereich eine höhere Beladbarkeit mit H₂S auf, die bei der höchsten angegebenen MAPA-Konzentration etwa den doppelten Wert des Vergleichbeispiels erreicht.

### 3. CO₂-Stoffübergangsgeschwindigkeit

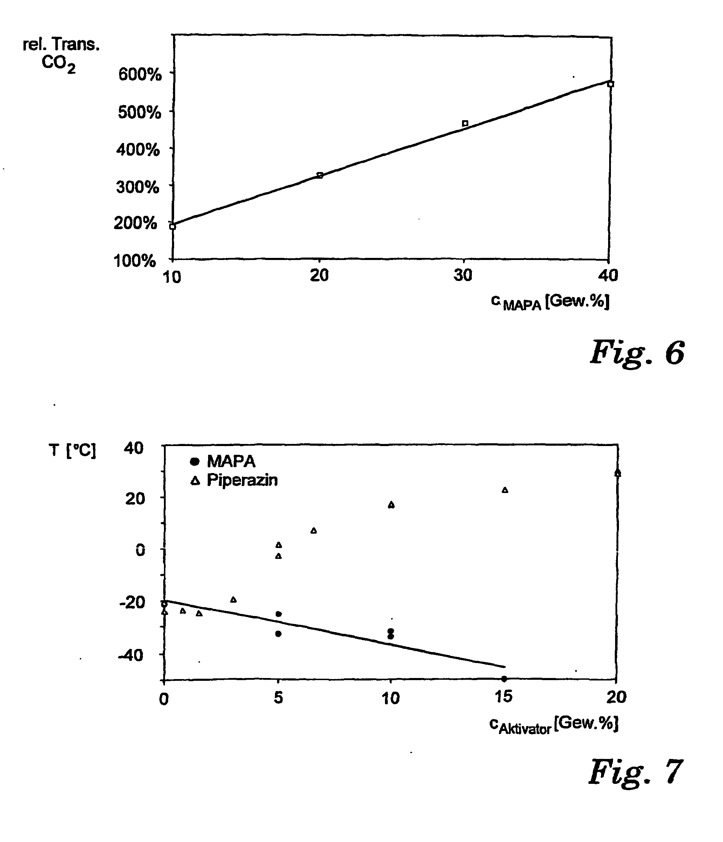

Die Stoffübergangsgeschwindigkeit wurde in einer Laminarstrahlkammer mit wasserdampfgesättigtem Sauergas bei 1 bar und 70 °C, Strahldurchmesser 0,94 mm, Strahllänge 1 bis 8 cm, Volumenstrom der Waschflüssigkeit 1,8 ml/s bestimmt und wird als Gasvolumen in Normalkubikmeter pro Oberfläche der Waschflüssigkeit, Druck und Zeit wiedergegeben (Nm³/m²/bar/h).
(3a) In Figur 5 ist die relative Stoffübergangsgeschwindigkeit von CO₂ ("rel.Tans. CO₂")in der obenstehend (Beispiel 1a; Figur 2) definierten Waschflüssigkeit in Abhängigkeit vom MAPA-Gehalt dagestellt. Oberhalb von 5 Gew.% weist die erfindungsgemäße Waschflüssigkeit mit zunehmender MAPA-Konzentration relativ zur Vergleichswaschflüssigkeit stark ansteigende Stoffübergangsgeschwindigkeiten auf, die bei der höchsten angegebenen Konzentration um den Faktor 5 höher sind als die des Vergleichsbeispiels.
(3b) In einem weiteren Experiment wird die relative CO₂-Stoffübergangsgeschwindigkeit einer erfindungsgemäßen Waschflüssigkeit mit 40 Gew.% Gesamtamingehalt (MAPA gelöst in einer Mischung aus MDEA und 60 Gew.% Wasser) bezogen auf die Stoffübergangsgeschwindigkeit einer Vergleichswaschflüssigkeit, die 10 Gew.% 3-(N,N)-Dimethylaminopropylamin, 30 Gew.% MDEA und 60 Gew.% Wasser enthält, in Abhängigkeit vom MAPA-Gehalt bestimmt. Der Aktivator der Vergleichswaschflüssigkeit ist also ebenfalls ein - allerdings nicht erfindungsgemäßes - Alkylendiamin. Das Ergebnis ist in Figur 6 dargestellt. Im gesamten Bereich weist die erfindungsgemäße Waschflüssigkeit mit zunehmender MAPA-Konzentration relativ zur Vergleichswaschflüssigkeit stark ansteigende Stoffübergangsgeschwindigkeiten auf, die bei der höchsten angegebenen Konzentration um den Faktor 5 höher sind als die der Vergleichswaschflüssigkeit. Die erfindungsgemäße Waschflüssigkeit benötigt daher für eine wirksame CO₂-Entfernung aus einem Gasstrom geringere Kontaktzeiten, so daß niedrigere Absorptionskolonnen eingesetzt werden können.

### 4. Erstarrungstemperatur der Waschflüssigkeit

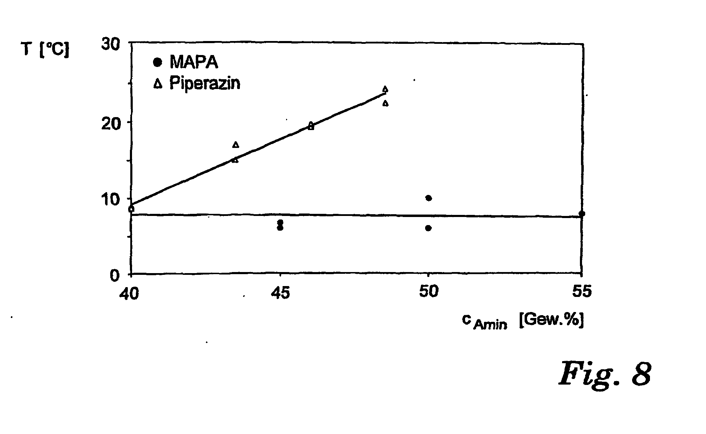

Die Erstarrungstemperatur wurde in Anlehnung an die ASTM-Methode D 2386-67 (entspricht DIN 51421) ermittelt, indem die entsprechende Flüssigkeit unter Rühren mit einem geringen Temperaturgradienten abgekühlt wurde. Die Löslichkeitstemperatur wurde durch Beobachten der ersten Kristallbildung, erkennbar an der Trübung der Lösung, ermittelt.
(4a) In Figur 7 ist der Temperatur/Konzentrations-Verlauf der Erstarrungspunkte einer Waschflüssigkeit mit 40 Gew.% Gesamtamingehalt, die MDEA und 60 Gew.% Wasser enthält, in Abhängigkeit von der Konzentration des Aktivators dargestellt. In erfindungsgemäßen Waschflüssigkeiten wird MAPA als Aktivator zugegeben (Kreise im Diagramm der Fig. 7). In Vergleichsversuchen wird Piperazin als Aktivator zugegeben (Dreiecke im Diagramm der Figur 7). Es zeigt sich, daß in der erfindungsgemäßen Waschflüssigkeit ab einer Aktivatorkonzentration von 5 Gew.% die Erstarrungstemperatur um ca. 20 Kelvin niedriger als die der Vergleichswaschflüssigkeit ist.
(4b) In einem weiteren Experiment wurde der Temperatur/Konzentrations-Verlauf der Erstarrungspunkte einer Waschflüssigkeit in Abhängigkeit vom Gesamtamingehalt untersucht. Die Basiswaschflüssigkeit hatte folgende Zusammensetzung: 60 Gew.% Wasser, 33,5 Gew.% MDEA und 6,5 Gew.% Piperazin (d.h. 40 Gew.% Gesamtamingehalt). In zwei Testreihen wurden Waschflüssigkeiten untersucht, deren Gesamtamingehalt - ausgehend von der Zusammensetzung der Basiswaschflüssigkeit - durch Ersetzen von Wasser durch MAPA (erfindungsgemäße Waschflüssigkeit) bzw. durch Ersetzen von Wasser durch Piperazin (Vergleichswaschflüssigkeit) erhöht wurde. Das Ergebnis ist im Diagramm der Figur 8 dargestellt. Die Erstarrungspunkte der erfindungsgemäßen Waschflüssigkeit (MAPA-Zugabe) werden dort durch Kreissymbole und die der Vergleichswaschflüssigkeit (Piperazin-Zugabe) durch Dreieckssymbole repäsentiert. Bei gleichem Gesamtamingehalt weist die Waschflüssigkeit mit 3-Methylaminopropylamin als Aktivator eine deutlich niedrigere Erstarrungstemperatur auf.

## Patentansprüche

1. Verfahren zum Entsäuern eines Fluidstroms, der Sauergase als Verunreinigungen enthält, wobei man
in wenigstens einem Absorptionsschritt den Fluidstrom mit einer Waschflüssigkeit in innigen Kontakt bringt, die eine wässrige Aminlösung enthält, die wenigstens ein tertiäres aliphatisches Alkanolamin mit 2 bis 12 C-Atomen und einen Aktivator der Formel
R₁HN-X-NHR₂
enthält, wobei X einen Alkylenrest mit 2 oder 3 C-Atomen, R₁ einen Methylrest und R₂ einen Methylrest oder ein Wasserstoffatom repräsentiert,
und man den von Sauergasen weitgehend gereinigten Fluidstrom und die mit Sauergasen beladene Waschflüssigkeit voneinander trennt.

2. Verfahren gemäß Anspruch 1, **dadurch gekennzeichnet, daß** man als Aktivator 3-Methylaminopropylamin verwendet.

3. Verfahren gemäß einem der Ansprüche 1 oder 2, **dadurch gekennzeichnet, daß** man die Waschflüssigkeit anschließend regeneriert und dann erneut der Absorptions- bzw. Extraktionszone zuführt.

4. Verfahren gemäß Anspruch 3, **dadurch gekennzeichnet, daß** man die Waschflüssigkeit durch ein- oder mehrstufiges Entspannen regeneriert.

5. Verfahren gemäß Anspruch 4, **dadurch gekennzeichnet, daß** man die Waschflüssigkeit nach dem Entspannen durch Strippen mit einem inerten Fluid, insbesondere Stickstoff oder Wasserdampf, regeneriert.

6. Verfahren gemäß einem der Ansprüche 1 bis 5, **dadurch gekennzeichnet, daß** man den Absorptionsschritt in mehreren aufeinanderfolgenden Teilschritten durchführt, wobei man den sauergashaltigen Fluidstrom in jedem der Teilschritte mit jeweils einem Teilstrom der Waschflüssigkeit in Kontakt bringt.

7. Verfahren gemäß Anspruch 6, **dadurch gekennzeichnet, daß** man die Teilströme der Waschflüssigkeit nach jeweils aufeinanderfolgenden Teilschritten des Regenerationsprozesses der Waschflüssigkeit gewinnt, so daß die Teilströme der Waschflüssigkeit eine abnehmende Beladung an Sauergasen aufweisen.

8. Waschflüssigkeit, insbesondere zur Verwendung in dem Verfahren nach einem der Ansprüche 1 bis 7, enthaltend eine wässrige Aminlösung, die wenigstens ein tertiäres aliphatisches Alkanolamin mit 2 bis 12 C-Atomen und einen Aktivator der Formel
R₁HN-X-NHR₂
enthält, wobei X einen Alkylenrest mit 2 oder 3 C-Atomen, R₁ einen Methylrest und R₂ einen Methylrest oder ein Wasserstoffatom repräsentiert.

9. Waschflüssigkeit gemäß Anspruch 8, **dadurch gekennzeichnet, daß** der Aktivator 3-Methylaminopropylamin ist.

10. Waschflüssigkeit gemäß einem der Ansprüche 8 oder 9, **dadurch gekennzeichnet, daß** die Konzentration des Alkanolamins 10 bis 60 Gew.%, vorzugsweise 20 bis 50 Gew.% und besonders bevorzugt 20 bis 40 Gew.% und die Konzentration des Aktivators 0,1 bis 50 Gew.%, vorzugsweise 5 bis 40 Gew.% und besonders bevorzugt 8 bis 30 Gew.% beträgt.

11. Waschflüssigkeit gemäß einem der Ansprüche 8 bis 10, **dadurch gekennzeichnet, daß** das Alkanolamin Methyldiethanolamin oder Triethanolamin ist.

12. Waschflüssigkeit gemäß einem der Ansprüche 8 bis 11, **dadurch gekennzeichnet, daß** die Waschflüssigkeit außerdem Piperazin oder Methylpiperazin enthält.

13. Verwendung eines Alkylendiamins der Formel
R₁HN-X-NHR₂,
wobei X ein Alkylenrest mit 2 oder 3 C-Atomen, R₁ ein Methylrest und R₂ ein Methylrest oder ein Wasserstoffatom ist, zum Entfernen von Sauergasen aus einem sauergashaltigen Fluidstrom.

14. Verwendung gemäß Anspruch 13, wobei das Alkylendiamin 3-Methylaminopropylamin ist.

## Claims

1. A process for deacidifying a fluid stream containing acid gases as impurities, which comprises, in at least one absorption step, bringing the fluid stream into intimate contact with a scrubbing liquid containing an aqueous amine solution which comprises at least one tertiary aliphatic alkanolamine having from 2 to 12 carbons and an activator of the formula
R₁HN-X-NHR₂,
where X is an alkylene radical having 2 or 3 carbons, R₁ is a methyl radical and R₂ is a methyl radical or a hydrogen,
and separating from one another the acid-gas-loaded scrubbing liquid and the fluid stream which has been substantially freed from acid gases.

2. A process as claimed in claim 1, wherein the activator is 3-methylaminopropylamine.

3. A process as claimed in either claim 1 or 2, wherein the scrubbing liquid is then regenerated and again fed to the absorption zone or extraction zone.

4. A process as claimed in claim 3, wherein the scrubbing liquid is regenerated by a single-stage or multistage expansion.

5. A process as claimed in claim 4, wherein the scrubbing liquid, after the expansion, is regenerated by stripping with an inert fluid, in particular nitrogen or steam.

6. A process as claimed in one of claims 1 to 5, wherein the absorption step is carried out in a plurality of sequential substeps, the acid-gas-containing fluid stream, in each of the substeps, being brought into contact in each case with a substream of the scrubbing liquid.

7. A process as claimed in claim 6, wherein the scrubbing liquid substreams are produced after each of the sequential substeps of the regeneration process of the scrubbing liquid, so that the scrubbing liquid substreams have a decreasing loading of acid gases.

8. A scrubbing liquid, in particular for the use in the process as claimed in one of claims 1 to 7, containing an aqueous amine solution which comprises at least one tertiary aliphatic alkanolamine having from 2 to 12 carbons and an activator of the formula
R₁HN-X-NHR₂,
where X is an alkylene radical having 2 or 3 carbons, R₁ is a methyl radical and R₂ is a methyl radical or a hydrogen.

9. A scrubbing liquid as claimed in claim 8, wherein the activator is 3-methylaminopropylamine.

10. A scrubbing liquid as claimed in either claim 8 or 9, wherein the concentration of the alkanolamine is from 10 to 60% by weight, preferably from 20 to 50% by weight, and particularly preferably from 20 to 40% by weight, and the concentration of the activator is from 0.1 to 50% by weight, preferably from 5 to 40% by weight, and particularly preferably from 8 to 30% by weight.

11. A scrubbing liquid as claimed in one of claims 8 to 10, wherein the alkanolamine is methyldiethanolamine or triethanolamine.

12. A scrubbing liquid as claimed in one of claims 8 to 11, wherein the scrubbing liquid also comprises piperazine or methylpiperazine.

13. The use of an alkylenediamine of the formula
R₁HN-X-NHR₂,
where X is an alkylene radical having 2 or 3 carbons, R₁ is a methyl radical and R₂ is a methyl radical or a hydrogen, for removing acid gases from an acid-gas-containing fluid stream.

14. The use as claimed in claim 13, wherein the alkylenediamine is 3-methylaminopropylamine.

## Revendications

1. Procédé de désacidification d'un courant de fluide contenant des impuretés de gaz acides
le courant de fluide étant mis en contact intime dans au moins une étape d'absorption avec un liquide de lavage qui contient une solution aqueuse d'amines contenant au moins une alcanolamine aliphatique tertiaire avec 2 à 12 atomes de carbone et un activateur de formule
R₁HN-X-NHR₂
X étant un radical alkylène, avec 2 ou 3 atomes de carbone, R₁ représentant un radical méthyle et R₂ un radical méthyle ou un atome d'hydrogène,
et le courant de fluide largement purifié de gaz acides et le liquide de lavage chargé de gaz acides étant séparés l'un de l'autre.

2. Procédé selon la revendication 1, **caractérisé en ce que** l'on utilise comme activateur la 3-méthylaminopropylamine.

3. Procédé selon l'une quelconque des revendications 1 ou 2, **caractérisé en ce que** l'on régénère ensuite le liquide de lavage et qu'on alimente de nouveau la zone d'absorption et/ou d'extraction.

4. Procédé selon la revendication 3, **caractérisé en ce que** l'on régénère le liquide de lavage par une détente à une ou plusieurs étapes.

5. Procédé selon la revendication 4, **caractérisé en ce que** l'on régénère le liquide de lavage après la détente par stripping avec un fluide inerte, en particulier l'azote ou la vapeur d'eau.

6. Procédé selon l'une quelconque des revendications 1 à 5, **caractérisé en ce que** l'étape d'absorption est réalisée en plusieurs étapes partielles successives, le courant de fluide contant des gaz acides étant mis en contact dans chaque étape partielle avec un courant partiel du liquide de lavage.

7. Procédé selon la revendication 6, **caractérisé en ce que** l'on obtient les courants partiels du liquide de lavage par des étapes successives partielles du processus de régénération du liquide de lavage, de sorte que les courants partiels du liquide de lavage comportent une charge en gaz acides décroissante.

8. Liquide de lavage, en particulier pour l'utilisation dans le procédé selon l'une quelconque des revendications 1 à 7, contenant une solution aqueuse d'amines qui contient au moins une alcanolamine aliphatique tertiaire avec 2 à 12 atomes de carbone et un activateur de formule
R₁HN-X-NHR₂
X étant un radical alkylène, avec 2 ou 3 atomes de carbone, R₁ représentant un radical méthyle et R₂ un radical méthyle ou un atome d'hydrogène.

9. Liquide de lavage selon la revendication 8, **caractérisé en ce que** l'activateur est la 3-méthylaminopropylamine.

10. Liquide de lavage selon l'une quelconque des revendications 8 ou 9, **caractérisé en ce que** la concentration de l'alcanolamine est de 10 à 60 % en poids, de préférence de 20 à 50 % en poids, voire de 20 à 40 % en poids et la concentration de l'activateur est de 0,1 à 50 % en poids, de préférence de 5 à 40 % en poids, voire de 8 à 30 % en poids.

11. Liquide de lavage selon l'une quelconque des revendications 8 à 10, **caractérisé en ce que** l'alcanolamine est la méthyldiéthanolamine ou la triéthanolamine.

12. Liquide de lavage selon l'une quelconque des revendications 8 à 11, **caractérisé en ce que** le liquide de lavage contient en outre de la pipérazine ou de la méthylpipérazine.

13. Utilisation d'une alkylènediamine de formule
R₁HN-X-NHR₂
X étant un radical alkylène, avec 2 ou 3 atomes de carbone, R₁ représentant un radical méthyle et R₂ un radical méthyle ou un atome d'hydrogène, pour l'élimination de gaz acides d'un courant de fluide en contenant.

14. Utilisation selon la revendication 13, l'alkylènediamine étant la 3-méthylaminopromylamine.
